# FASCICULE DE BREVET EUROPEEN

(11) **EP 0 744 499 B1**
(45) Date de publication et mention de la délivrance du brevet: **04.07.2001**
(21) Numéro de dépôt: 96400837.9
(22) Date de dépôt: 19.04.1996
(51) Int. Cl.: E02F 3/14, B65G 45/14

(54) **Lame racleuse pour excavateur du type chaîne à godets**
Abstreifblatt für eine Schaufelkette
Scraper blade for bucket chain

(30) Priorité: 28.04.1995 FR 9505118
(43) Date de publication de la demande: 27.11.1996
(73) Titulaire: PELERIN ATELIERS DE CONSTRUCTIONS D'ORCAMPS, 02200 Soissons (FR)
(72) Inventeur: Van de Caveye, Yves, 60000 Beauvais (FR)
(74) Mandataire: Loyer, Bertrand

(56) Documents cités:
- DE-U- 9 303 591
- US-A- 1 489 290

## Description

La présente invention est relative aux godets d'excavateurs tels par exemple que ceux utilisés dans les carrières ou les dispositifs de stockage de matières premières.

En particulier, il est connu dans l'industrie de la terre cuite d'entreposer dans des fosses recouvertes d'une toiture, la terre provenant de la ou des carrières. Cette terre est ensuite reprise pour être préparée en vue du passage en filière ou en mouleuse de façon à fabriquer les produits qui seront ensuite séchés et cuits.

La reprise de la terre dans la fosse se fait en général au moyen d'un excavateur. Lorsque la fosse est ronde l'excavateur est animé d'un mouvement rotatif ; lorsque la fosse est rectangulaire, l'excavateur va être animé d'une part d'un mouvement de va-et-vient d'un côté à l'autre de la fosse, d'autre part d'un mouvement de recul après chaque trajet latéral pour reprendre une nouvelle couche. Cet excavateur peut être porté soit par un pont roulant et des élingues soit par un chariot transversal, disposé en bord de fosse, sur lequel il est articulé de façon que les passes soient définies par un angle d'abaissement, mais il s'avère dans la pratique impossible de faire en sorte qu'il soit toujours rigoureusement perpendiculaire à son sens de déplacement, de sorte que lorsqu'il se déplace latéralement, il prend une position légèrement oblique, l'extrémité inférieure de l'excavateur étant légèrement en retard, dans son déplacement, par rapport à son extrémité supérieure. Les différentes tolérances de réalisation et plus particulièrement celles du génie civil ainsi que les dispersions d'arrêt en fin de déplacement font que la position relative des bords des godets par rapport aux bords des murs de fosse est variable. Il en résulte qu'en fin de course l'excavateur n'est pas rigoureusement parallèle et à une distance constante de la paroi latérale, verticale, de la fosse et qu'une mince couche de terre, de l'ordre de 1 à 3 centimètres environ, demeure collée à la paroi.

Pour éliminer cette couche de terre, on dispose des racleurs sur les côtés des godets de l'excavateur (voir DE-U-9303591 ou US-A-1489290)

Cependant, il s'avère que, périodiquement, ces racleurs accrochent une aspérité de la paroi ou sont soumis à des contraintes anormales. Il en résulte alors ou bien que la paroi est abîmée, ou bien que le racleur casse ou se déforme, ou bien encore que le godet lui-même soit détérioré.

L'invention a pour but de supprimer cet inconvénient et concerne un excavateur à godets qui est muni de racleurs élastiques constitués par une lame portée par un support élastique, ledit support élastique comportant deux branches pratiquement parallèles.

De préférence :
- le support élastique est constitué par une lame de ressort repliée en U de façon à comporter deux branches pratiquement parallèles,
- le support élastique est constitué par deux pièces articulées l'une à l'autre par une charnière avec interposition entre les deux pièces d'un moyen élastique tel qu'un ressort de compression ou analogue, par exemple un silentbloc,
- le support élastique est porté par un élément porteur fixé à l'une des branches dudit support élastique tandis que l'autre branche porte la lame de raclage,
- l'extrémité qui porte la lame de raclage est repliée de telle sorte que ladite lame de raclage fasse avec la paroi un angle, dit angle d'attaque,
- l'élément porteur porte un étrier entre lequel sont disposées les deux branches afin de limiter le mouvement vers l'extérieur de la branche portant la lame de raclage et de maintenir en précontrainte ledit support élastique,
- la lame est disposée en hauteur à une distance "d" au-dessus du trajet parcouru par le bord d'attaque des godets cette distance "d" étant légèrement supérieure à la hauteur de la marche laissée par les godets lors de la passe précédente,
- la lame de raclage est en matière plastique, par exemple en téflon,
- la lame de raclage est en métal,
- chaque racleur élastique est porté directement par un chaînon de la chaîne portant les godets indépendamment de ceux-ci,
- chaque racleur est disposé entre deux godets,
- chaque racleur élastique est porté par un godet.

A titre d'exemple non limitatif et pour faciliter la compréhension de l'invention, on a représenté aux dessins annexés :
Figure 1 : une vue en élévation latérale d'un premier mode de réalisation de l'invention,
Figure 2 : une vue en plan de la figure 1,
Figure 3 : une vue partielle selon AA de la figure 1.
Figure 4 : une vue schématique en plan d'un deuxième mode de réalisation d'un racleur selon l'invention.

En se reportant à ces figures, on voit que l'excavateur selon l'invention est constitué par une chaîne 1 à deux brins qui porte des godets 2.

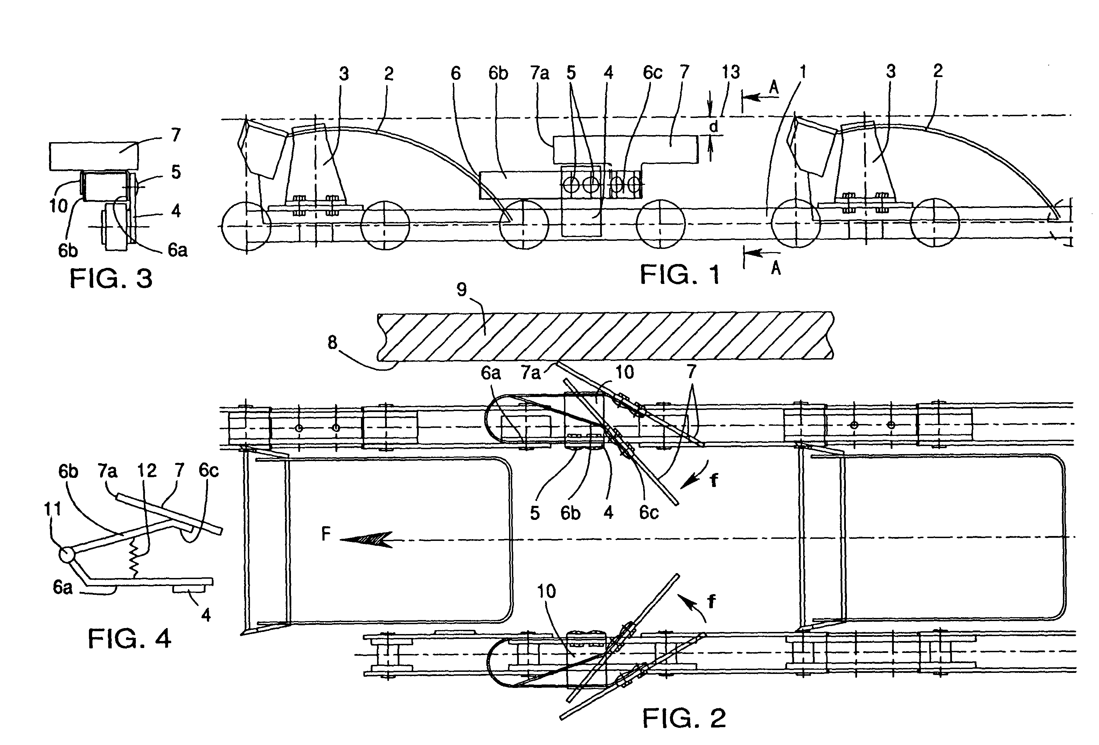

A la figure 1 on a représenté cinq chaînons de la chaîne 1, le premier porte un godet 2 au moyen d'un support 3, le deuxième ne porte rien, le troisième porte le racleur qui sera décrit ci-après, le quatrième ne porte rien, le cinquième porte un godet 2 au moyen d'un support 3 et ainsi de suite.

Le troisième chaînon porte un élément porteur 4 auquel est fixé par deux écrous 5, un support élastique 6.

Dans la variante de réalisation représentée à la figure 1, le support élastique 6 est un ressort en U 6.

Ce ressort 6 est constitué par une lame en acier rectangulaire, qui est repliée sur 180° de façon à comporter deux branches pratiquement parallèles 6a et 6b.

Le ressort 6 est fixé à l'élément porteur 4 par sa branche 6a ; il porte une lame de raclage 7 par sa branche 6b.

De préférence, comme cela est représenté, l'extrémité 6c de la branche 6b est repliée vers l'intérieur de façon à faire un angle avec la branche 6b et la lame de raclage 7 est fixée à cette extrémité 6c de la branche 6b, de telle sorte que la lame de raclage 7 fasse avec la paroi un angle, dit angle d'attaque.

Cet angle d'attaque est adapté en fonction de la consistance de la matière stockée, il est de 30° sur les dessins joints.

Sur la figure 2, le ressort 6 et sa lame 7 sont représentés dans les deux positions extrêmes qu'ils peuvent occuper.

En position normale, les godets se déplaçant dans le sens de la flèche F, l'extrémité avant 7a de la lame de raclage 7 fait saillie de quelques centimètres au-delà de la chaîne 1.

Lorsqu'elle est en appui contre l'une quelconque des parois 8 de la fosse, la lame 7 racle contre celle-ci par son extrémité avant et en détache la terre par une action de poussée. Lorsque la paroi 8 présente une aspérité, la lame 7 peut s'effacer vers l'intérieur de l'excavateur comme cela est représenté par les flèches f.

L'élément porteur 4 du support élastique 6 et de la lame de raclage 7 peut être fixé soit sur le bord de chaque godet, soit sur la chaîne portant les godets de façon à être entraîné par le mouvement de la chaîne.

Comme cela est représenté, il est préférable que l'élément porteur 4 soit porté directement par la chaîne 1 et non pas par le godet. Par une telle disposition, le racleur est indépendant desdits godets ce qui rend les opérations de maintenance et de remplacement plus simples à réaliser. De plus, cela évite que les parois latérales du godet 2 ne soient endommagées si, par accident, la lame 7 accroche quelque chose.

Par ailleurs, une telle disposition présente l'avantage de ramener la matière décrochée de la paroi dans la trajectoire du godet suivant le racleur.

Le racleur suivant l'invention peut être réalisé de le manière usuelle avec une lame 7 en métal mais permet avantageusement l'utilisation d'une lame en téflon, ce qui permet alors de recouvrir la paroi 8 du mur 9 de peinture ce qui a pour effet de faciliter le détachement de la terre qui aura moins tendance à rester collée contre un mur peint que contre un mur en ciment brut. On pourra également lisser le béton, ce que l'on renonce à faire avec les dispositifs de raclage existant qui rayent la paroi du mur.

De préférence, l'élément porteur 4 porte encore un étrier 10 qui a une forme en U inversé entre les branches duquel sont disposées les deux branches 6a, 6b du support élastique 6 de façon à limiter les mouvements vers l'extérieur de la branche 6b qui porte la lame 7.

De plus, cet étrier 10 permet de réaliser le support élastique 6 de façon que ses deux branches 6a et 6b ne soient pas parallèles mais fassent entre elles un angle d'environ 150° ; ces deux branches sont rapprochées élastiquement l'une de l'autre et maintenues en position pratiquement parallèle grâce à l'étrier 10. On obtient ainsi que le support élastique 6 est bandé en permanence, ou en précontrainte. De préférence, cette précontrainte correspond à un effort d'environ 2 kg sur la lame 7. Ceci a pour effet d'empêcher que la lame 7 ne soit en permanence animée de mouvements vibratoires lorsqu'elle racle contre la paroi 8.

La figure 4 représente une variante de réalisation dans laquelle les mêmes éléments portent les mêmes références.

Dans cette variante de réalisation, le support élastique 6 est constitué de deux pièces 6a et 6b articulées l'une à l'autre par une charnière 11 avec interposition entre les deux branches 6a et 6b d'un moyen élastique tel qu'un ressort de compression 12 ou analogue, par exemple un silentbloc.

De préférence, comme cela est représenté, le dispositif de raclage porté par la chaîne 1 est disposé entre deux godets et la hauteur de l'élément porteur 4 est telle qu'il opère à un niveau situé au-dessus de la base du godet 2.

En effet, comme à la fin d'une passe les godets 2 n'arrivent pas jusque contre la paroi 8, il reste au début de la passe retour une sorte de petite marche de matière : la lame 7 doit pouvoir, lors de la fin de la passe suivante, supprimer cette petite marche par raclage. A cette fin, la lame 7 est placée à une distance "d" (figure 1) au-dessus du trajet 13 (indiqué en traits tiretés) des bords d'attaque des godets 2, cette distance "d" étant légèrement supérieure à la hauteur de la marche laissée par les godets lors de la passe précédente.

## Revendications

1. Excavateur à godets du type comportant une chaîne (1) portant des godets (2) et des racleurs élastiques constitués par une lame (7) portée par un support élastique (6), caractérisé par le fait que ledit support élastique (6) comporte deux branches (6a, 6b) pratiquement parallèles.

2. Excavateur selon la revendication 1, dans lequel le support élastique (6) est constitué par une lame de ressort repliée en U de façon à comporter deux branches (6a, 6b) pratiquement parallèles.

3. Excavateur selon la revendication 1, dans lequel le support élastique (6) est constitué par deux pièces (6a, 6b) articulées l'une à l'autre par une charnière (11) avec interposition entre les deux pièces (6a, 6b) d'un moyen élastique tel qu'un ressort de compression (12) ou analogue, par exemple un silentbloc.

4. Excavateur selon l'une quelconque des revendications 1 à 3, dans lequel le support élastique (6) est porté par un élément porteur (4) fixé à l'une des branches (6a) dudit support élastique (6) tandis que l'autre branche (6b) porte la lame de raclage (7).

5. Excavateur selon l'une quelconque des revendications précédentes, dans lequel l'extrémité (6c) qui porte la lame de raclage (7) est repliée de telle sorte que ladite lame de raclage (7) fasse avec la paroi un angle, dit angle d'attaque.

6. Excavateur selon la revendication 4, dans lequel l'élément porteur (4) porte un étrier (10) entre lequel sont disposées les deux branches (6a, 6b) afin de limiter le mouvement vers l'extérieur de la branche (6b) portant la lame de raclage (7) et de maintenir en précontrainte ledit support élastique (6).

7. Excavateur selon l'une quelconque des revendications 1 à 6, dans lequel la lame (7) est disposée en hauteur à une distance "d" au-dessus du trajet (13) parcouru par le bord d'attaque des godets (2) cette distance "d" étant légèrement supérieure à la hauteur de la marche laissée par les godets (2) lors de la passe précédente.

8. Excavateur selon l'une quelconque des revendications 1 à 7, dans lequel la lame de raclage (7) est en matière plastique, par exemple en téflon.

9. Excavateur selon l'une quelconque des revendications 1 à 7, dans lequel la lame de raclage (7) est en métal.

10. Excavateur selon l'une quelconque des revendications 1 à 9, dans lequel chaque racleur élastique est porté directement par un chaînon de la chaîne (1) portant les godets (2) indépendamment de ceux-ci.

11. Excavateur selon la revendication 10, dans lequel chaque racleur est disposé entre deux godets (2).

12. Excavateur selon l'une quelconque des revendications 1 à 9, dans lequel chaque racleur élastique est porté par un godet (2).

## Patentansprüche

1. Eimerbagger der Art mit einer Kette (1), die Baggereimer (2) und elastische Abstreicher trägt, die aus einem von einer elastischen Stütze (6) getragenen Blatt (7) bestehen, dadurch gekennzeichnet, daß die elastische Stütze (6) zwei praktisch zueinander parallele Schenkel (6a, 6b) umfaßt.

2. Bagger nach Anspruch 1, bei dem die elastische Stütze (6) aus einem Federblatt besteht, das U-förmig derart umgebogen ist, daß es zwei praktisch zueinander parallele Schenkel (6a, 6b) aufweist.

3. Bagger nach Anspruch 1, bei dem die elastische Stütze (6) aus zwei Teilen (6a, 6b) besteht, die mittels eines Scharniers (11) aneinander angelenkt sind, wobei ein elastisches Mittel, wie eine Druckfeder (12) oder etwas Analoges, z. B. ein Silentbloc, zwischen den beiden Teilen (6a, 6b) angeordnet ist.

4. Bagger nach einem der Ansprüche 1 bis 3, bei dem die elastische Stütze (6) von einem Trageelement (4) getragen wird, das an einem der Schenkel (6a) der elastischen Stütze (6) befestigt ist, während der andere Schenkel (6b) das Abkratzblatt (7) trägt.

5. Bagger nach einem der vorhergehenden Ansprüche, bei dem das Ende (6c), welches das Abkratzblatt (7) trägt, so umgebogen ist, daß das Streichblatt (7) mit der Wand einen Winkel als sogenannten Anstellwinkel bildet.

6. Bagger nach Anspruch 4, bei dem das Trageelement (4) einen Bügel (10) aufweist, zwischen dem die beiden Schenkel (6a, 6b) angeordnet sind, um die Bewegung des Schenkels (6b), der das Abkratzblatt (7) trägt, nach außen zu begrenzen und den elastischen Träger (6) unter Vorspannung zu halten.

7. Bagger nach einem der Ansprüche 1 bis 6, bei dem das Blatt (7) in der Höhe in einem Abstand "d" oberhalb der Bahn (13) angeordnet ist, welche die Vorderkante der Eimer (2) durchläuft, wobei dieser Abstand "d" etwas größer als die Höhe des Spiels ist, das die Eimer (2) während des vorhergehenden Durchlaufs freilassen.

8. Bagger nach einem der Ansprüche 1 bis 7, bei dem das Abkratzblatt (7) aus Kunststoff, z. B. aus Teflon, besteht.

9. Bagger nach einem der Ansprüche 1 bis 7, bei dem das Abkratzblatt (7) aus Metall besteht.

10. Bagger nach einem der Ansprüche 1 bis 9, bei dem jeder elastische Abstreicher direkt von einem Glied der Kette (1), das die Eimer (2) trägt, unabhängig von diesen getragen wird.

11. Bagger nach Anspruch 10, bei dem jeder Abstreicher zwischen zwei Eimern (2) angeordnet ist.

12. Bagger nach einem der Ansprüche 1 bis 9, bei dem jeder elastische Abstreicher von einem Eimer (2) getragen wird.

## Claims

1. Bucket excavator of the type comprising a chain (1) carrying buckets (2) and elastic scrapers consisting of a blade (7) carried by an elastic support (6), characterised in that said elastic support (6) comprises two substantially parallel branches (6a, 6b).

2. Excavator according to claim 1, in which the elastic support (6) consists of a spring blade folded into a U so as to comprise two substantially parallel branches (6a, 6b).

3. Excavator according to claim 1, in which the elastic support (6) consists of two parts (6a, 6b) articulated to one another by a hinge (11) with interposition between the two parts (6a, 6b) of an elastic means such as a compression spring (12) or the like., for example a shock mount.

4. Excavator according to any of claims 1 to 3, in which the elastic support (6) is carried by a carrier element (4) fixed to one of the branches (6a) of said elastic support (6) whereas the other branch (6b) carries the scraping blade (7).

5. Excavator according to any of the preceding claims, in which the end (6c) carrying the scraping blade (7) is folded so that said scraping blade (7) encloses with the wall an angle known as the angle of attack.

6. Excavator according to claim 4, in which the carrier element (4) carries a stirrup (10) between which the two branches (6a, 6b) are disposed in order to limit the outward movement of the branch (6b) carrying the scraping blade (7) and to bias said elastic support (6).

7. Excavator according to any of claims 1 to 6, in which the blade (7) is disposed in height at a distance "d" above the path (13) covered by the attacking edge of the buckets (2), this distance "d" being slightly greater than the height of the step left by the buckets (2) during the preceding pass.

8. Excavator according to any of claims 1 to 7, in which the scraping blade (7) is of plastics material, for example of Teflon.

9. Excavator according to any of claims 1 to 7, in which the scraping blade (7) is of metal.

10. Excavator according to any of claims 1 to 9, in which each elastic scraper is carried directly by a link of the chain (1) carrying the buckets (2) independently of the buckets (2).

11. Excavator according to claim 10, in which each scraper is disposed between two buckets (2).

12. Excavator according to any of claims 1 to 9, in which each elastic scraper is carried by a bucket (2).
